# EUROPEAN PATENT APPLICATION

(11) **EP 4 643 625 A1**
(43) Date of publication of application: **05.11.2025**
(21) Application number: 23912017.3
(22) Date of filing: 25.12.2023
(51) Int. Cl.: A01B 69/00, G06Q 50/02

(54) **FIELD REGISTRATION DEVICE, FIELD REGISTRATION METHOD, AND COMPUTER PROGRAM**

(30) Priority: 27.12.2022 JP 2022209623
(71) Applicant: Kubota Corporation, Osaka 556-8601 (JP)
(72) Inventor: TAMATANI, Kenji, Sakai-shi, Osaka 590-0908 (JP)
(74) Representative: Cabinet Beau de Loménie
(86) International application number: PCT/JP2023/046303
(87) International publication number: WO 2024/143237

(57) **Abstract**

The present disclosure is a farm field registration device including: an acquisition device that acquires boundary information for defining a boundary line of a farm field; a control device that creates a farm field map in a predetermined data format based on the boundary information; and a storage device that stores the farm field map, in which the acquisition device acquires division information for defining a division line that divides the farm field into a plurality of divided farm fields each having a plantable area, the control device executes division processing of creating a divided farm field map corresponding to the plurality of divided farm fields based on the division information, and the storage device stores the divided farm field map.

## Description

### TECHNICAL FIELD

The present disclosure relates to a farm field registration device, a farm field registration method, and a computer program. The present application claims priority based on Japanese Patent Application No. 2022-209623 filed on December 27, 2022, the entire contents of which are incorporated herein by reference.

### BACKGROUND ART

Patent Literature 1 describes a paddy field work machine capable of easily confirming and changing a work plan and improving traveling safety.

A paddy field work machine of Patent Literature 1 includes a traveling vehicle body, a work device connected to the traveling vehicle body and capable of performing predetermined work on a farm field, an acquisition device of position information of the traveling vehicle body, and a control device that causes the traveling vehicle body to automatically perform traveling including the acquired position information and turning.

The control device acquires farm field information based on the acquired position information when causing the vehicle body to manually travel along at least three sides of the farm field, and causes the traveling vehicle body to automatically travel according to the acquired farm field information while displaying the farm field information on a display device provided in the

### CITATION LIST

### PATENT LITERATURE

PATENT LITERATURE 1: Japanese Laid-Open Patent Publication No. 2022-102335

### SUMMARY OF THE INVENTION

A device according to one aspect of the present disclosure is a farm field registration device including: an acquisition device that acquires boundary information for defining a boundary line of a farm field; a control device that creates a farm field map in a predetermined data format based on the boundary information; and a storage device that stores the farm field map, in which the acquisition device acquires division information for defining a division line that divides the farm field into a plurality of divided farm fields each having a plantable area, the control device executes division processing of creating a divided farm field map corresponding to the plurality of divided farm fields based on the division information, and the storage device stores the divided farm field map.

A method according to one aspect of the present disclosure is a method executed by a farm field registration device including an acquisition device that receives input of boundary information for defining a boundary line of a farm field, a control device that creates a farm field map in a predetermined data format based on the boundary information, and a storage device that stores the farm field map, and the method includes: acquiring division information for defining a division line that divides the farm field into a plurality of divided farm fields each having a plantable area; executing division processing of calculating a divided farm field map corresponding to the plurality of divided farm fields based on the division information; and storing the divided farm field map.

A computer program according to one aspect of the present disclosure is a computer program for causing a computer to function as a farm field registration device including an acquisition device that receives input of boundary information for defining a boundary line of a farm field, a control device that creates a farm field map in a predetermined data format based on the boundary information, and a storage device that stores the farm field map, and the computer program includes: acquiring division information for defining a division line that divides the farm field into a plurality of divided farm fields each having a plantable area; executing division processing of calculating a divided farm field map corresponding to the plurality of divided farm fields based on the division information; and storing the divided farm field map.

Embodiment of the present disclosure can be implemented by a device, a system, a method, an integrated circuit, a computer program, a non-transitory computer-readable recording medium, or any combination thereof.

The properties of the recording medium may be either volatile or nonvolatile. The device may include a plurality of individual devices. In the case of a configuration including a plurality of individual devices, the individual devices may be arranged in one housing, or may be arranged separately in two or more separate housings.

### BRIEF DESCRIPTION OF DRAWINGS

FIG. 1 is an overall configuration diagram of a work support system.
FIG. 2 is a side view illustrating an example of a tractor.
FIG. 3 is a perspective view illustrating an example of an operation terminal and an operation switch group.
FIG. 4 is an explanatory view illustrating an example of a setting screen of a work plan.
FIG. 5 is an explanatory view illustrating an example of a notification screen of the work plan.
FIG. 6 is an explanatory diagram illustrating an example of an initial setting screen and a division setting screen.
FIG. 7 is an explanatory diagram illustrating an example of the division setting screen and a content confirmation screen.
FIG. 8 is an explanatory diagram illustrating an example of the content confirmation screen and a route setting screen.
FIG. 9 is an explanatory diagram illustrating an example of registration processing of a farm field map.
FIG. 10 is an explanatory diagram illustrating an example of division processing of the farm field map.
FIG. 11 is an explanatory diagram illustrating an example of generation processing of a travel route.

### DETAILED DESCRIPTION

### <Technical problem of present disclosure>

For example, in upland farming, two or more kinds of crops may be planted in one farm field. In addition, a work plan including the correspondence relationship between a farm field and the crop, the harvest amount of the crop, and the like can vary from year to year.

Therefore, there is a demand for changing the area of the farm field once determined at the beginning of the year or changing the type of crops to be planted in the farm field. In this regard, in Patent Literature 1, farm field information is uniformly determined for rice cultivation, and changes in area and planting variety are not assumed.

In view of such conventional problems, an object of the present disclosure is to easily change a farm field map once registered.

### <Effects of present disclosure>

According to the present disclosure, the farm field map once registered can be easily changed.

### <Summary of embodiment of present disclosure>

Hereinafter, a summary of an embodiment of the present disclosure will be listed and described.
(1) A device according to the present embodiment is a farm field registration device including: an acquisition device that acquires boundary information for defining a boundary line of a farm field; a control device that creates a farm field map in a predetermined data format based on the boundary information; and a storage device that stores the farm field map, in which the acquisition device acquires division information for defining a division line that divides the farm field into a plurality of divided farm fields each having a plantable area, the control device executes division processing of creating a divided farm field map corresponding to the plurality of divided farm fields based on the division information, and the storage device stores the divided farm field map.
   According to the farm field registration device of the present embodiment, since the control device executes the division processing of creating the divided farm field map corresponding to the plurality of divided farm fields based on the division information for defining the division line that divides the farm field into the plurality of divided farm fields and the storage device stores the created divided farm field map, the farm field map once registered can be easily changed.
(2) In the farm field registration device of the present embodiment, in a case where the division information includes areas of the plurality of divided farm fields, the division processing may include processing of determining, based on the areas, a position of the division line by moving at least one side of the farm field map in parallel to a center side.
   In this way, since the position of the division line is automatically determined only by inputting the areas, setting input of the division information necessary for creating the farm field map is simplified.
(3) In the farm field registration device of the present embodiment, in a case where the acquisition device further acquires types of crops to be planted in the plurality of divided farm fields, the division processing may include processing of determining a map to which one of the types of crops is to be associated among the plurality of divided farm field maps.
   In this way, the divided farm field map and the crops to be planted in the divided farm field can be associated with each other automatically.
(4) In the farm field registration device of the present embodiment, in a case where the farm field registration device is a management device capable of communicating with an agricultural machine capable of performing automatic driving, the management device may transmit the plurality of divided farm field maps to the agricultural machine.
   In this way, since the divided farm field map generated by the management device can be provided to the agricultural machine capable of performing automatic operation, the agricultural machine does not need to generate the divided farm field map.
(5) In the farm field registration device of the present embodiment, the control device may generate a travel route of an agricultural machine in a case where the agricultural machine performs work travel by automatic driving, for each of the plurality of divided farm field maps.
   In this way, the travel route corresponding to each divided farm field map can be generated.
(6) In the farm field registration device of the present embodiment, in a case where the farm field registration device is a management device capable of communicating with an agricultural machine capable of performing automatic driving, the management device may transmit the travel route generated by the control device to the agricultural machine.
   In this way, since the travel route generated by the management device corresponding to the divided farm field map can be provided to the agricultural machine capable of performing automatic driving, the agricultural machine does not need to generate the travel route corresponding to the divided farm field map.
(7) In the farm field registration device of the present embodiment, in a case where the farm field registration device is an agricultural machine capable of performing automatic driving, the agricultural machine may generate a travel route in a case of performing work travel by automatic driving, for each of the plurality of divided farm field maps received from the management device.
   In this way, the agricultural machine can autonomously generate the travel route for the divided farm field map provided from the management device.
(8) In the farm field registration device of the present embodiment, in a case where the farm field registration device is an agricultural machine capable of performing automatic driving, the agricultural machine may generate a travel route in a case of performing work travel by automatic driving, for each of the plurality of divided farm field maps created by the division processing.
   In this way, the agricultural machine can autonomously generate the travel route for the divided farm field map generated by its own machine.
(9) A method according to the present embodiment is a farm field registration method executed in the farm field registration device of (1) to (8) described above.
   Therefore, the farm field registration method of the present embodiment exhibits the operational effects similar to those of the farm field registration device of (1) to (8) described above.
(10) A computer program according to the present embodiment is a computer program that causes a computer to function as the farm field registration device of (1) to (8) described above.
   Therefore, the computer program of the present embodiment exhibits the operational effects similar to those of the farm field registration device of (1) to (8) described above.

### <Details of embodiment of present disclosure>

Hereinafter, the embodiment of the present disclosure will be described in detail with reference to the drawings. Note that at least a part of the embodiment described below may be arbitrarily combined.

### [Overall configuration of system]

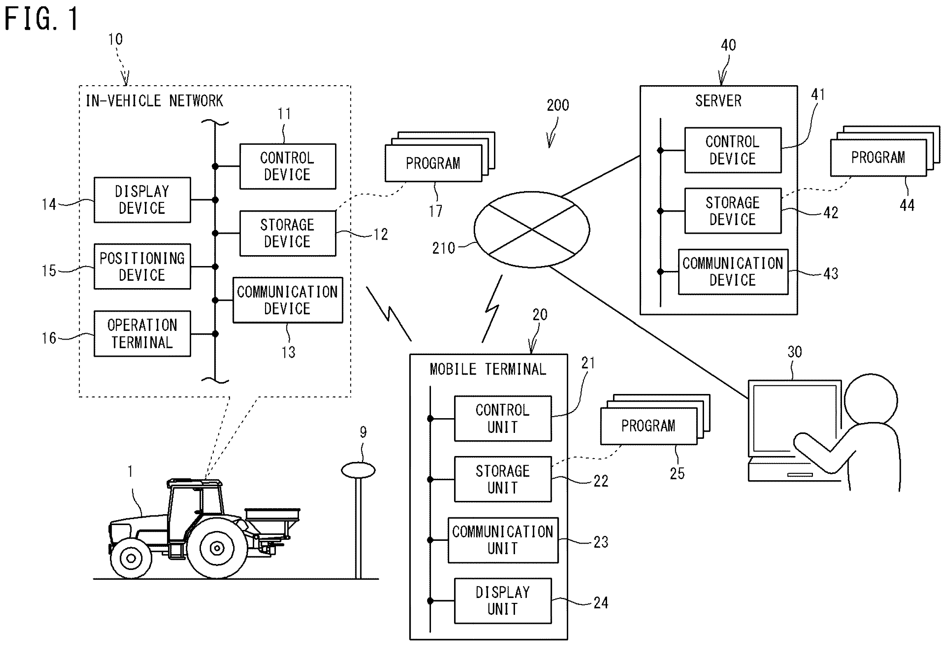

FIG. 1 is an overall configuration diagram of a work support system 200 according to the present embodiment.

The work support system (hereinafter, also referred to as "support system") 200 of the present embodiment is a system in which a mobile terminal 20, a management terminal 30, a server 40, and the like cooperate to support the agricultural works performed by a work vehicle 1 on the ground. The support system 200 includes the work vehicle 1, the mobile terminal 20, the management terminal 30, and the server 40 as communication nodes for exchanging information.

The work vehicle 1, the mobile terminal 20, the management terminal 30, and the server 40 are communicably connected by a public communication network 210 including the Internet and the like. The connection between the mobile terminal 20 and the public communication network 210 may include wireless communication such as a mobile communication system.

The mobile terminal 20 is also communicably connected to an in-vehicle network 10 of the work vehicle 1. The communication connection between the mobile terminal 20 and the in-vehicle network 10 may be either wireless or wired.

The mobile terminal 20 is, for example, a wireless terminal assigned to a worker who uses the work vehicle 1. When performing work, the worker carries the mobile terminal 20 and boards the work vehicle 1.

The management terminal 30 is, for example, a personal computer (PC) assigned to an administrator who manages one or a plurality of work vehicles 1 and the worker who is an occupant thereof. The administrator is a main user of the support system 200 registered in advance as a member, in the server 40.

The server 40 can communicate with the work vehicle 1, the mobile terminal 20, and the management terminal 30. The server 40 has a function as a "management device" that creates a work plan of the work vehicle 1 and creates a farm field map based on setting information and the like input from the management terminal 30.

The "work plan" is a data group that defines a schedule (information including the contents of 5W1H) of near future work performed by the work vehicle 1 in a predetermined work region. The "farm field map" is a data group in a predetermined data format representing the position and shape of the farm field included in the farm.

### [Work vehicle (tractor)]

The work vehicle 1 of the present embodiment is, for example, an agricultural machine. Examples of the agricultural machine include a tractor, a combine harvester, a rice transplanter, and the like. In the present embodiment, the work vehicle 1 is assumed to be a tractor 1 that is a type of agricultural machine.

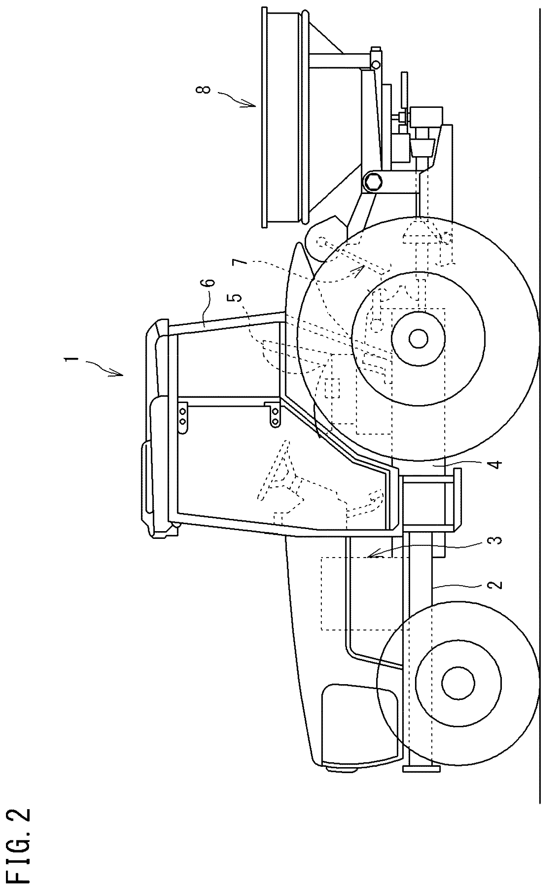

FIG. 2 is a side view illustrating an example of the tractor 1. As illustrated in FIG. 2, the tractor 1 includes a traveling vehicle body 2 having four wheels, a prime mover 3 such as a diesel engine, and a transmission device 4. The traveling vehicle body 2 is mounted with a driver's seat 5 and a cabin 6 surrounding the driver's seat 5.

A coupling portion 7 constituted by, for example, a three-point link mechanism is provided behind the traveling vehicle body 2. A work device (also referred to as "implement") 8 is detachably coupled to the coupling portion 7. When the work device 8 is coupled to the coupling portion 7, the work device 8 can be pulled by the traveling vehicle body 2.

As the work device 8, for example, a tilling device, a fertilizer spraying device, a pesticide spraying device, a harvest device, or the like is adopted. FIG. 2 illustrates an example in which a fertilizer spraying device is attached. The work device 8 coupled to the coupling portion 7 is not limited to the above-described device, and may be another device.

### [Configuration example of in-vehicle network]

Returning to FIG. 1, the tractor 1 includes the in-vehicle network 10 conforming to a communication standard such as a controller area network (CAN).

The communication nodes of the in-vehicle network 10 include a control device 11, a storage device 12, a communication device 13, a display device 14, a positioning device 15, and an operation terminal 16. These devices 11 to 16 are connected by a predetermined communication cable such as a CAN bus.

The control device 11 is an in-vehicle control device including an electronic control unit (ECU) that controls the traveling system and the work system of the tractor 1 based on operation signals output from operation tools (steering, operation lever, operation switch, and the like) near the driver's seat 5 and detection signals from sensors.

For example, the control device 11 raises and lowers the coupling portion 7 in accordance with the operation signal of the operation lever, adjusts the rotation speed of the prime mover 3 in accordance with an accelerator opening, and operates a braking mechanism (not illustrated) in accordance with a brake operation.

The control device 11 acquires the current own-vehicle position substantially in real time from the positioning device 15. The control device 11 can autonomously control the traveling system and the work system by, for example, automatic driving at level 3 based on the own-vehicle position.

The own-vehicle position of the tractor 1 is used for purposes other than the automatic driving, such as instructing the start position of the tilling work to the worker by the display device 14.

The storage device 12 is an auxiliary storage device including a non-volatile memory such as a hard disk drive (HDD) and a solid state drive (SSD). The storage device 12 may include a flash read only memory (ROM), a universal serial bus (USB) memory, or an SD card. A computer program 17 stored in the storage device 12 includes a program for causing a control device 41 to execute registration of a farm field map, generation and registration of a travel route for automatic driving, and the like.

The communication device 13 is, for example, a gateway for connecting the in-vehicle network 10 to an external device.

The communication device 13 performs short-distance or long-distance communication with the external device according to a predetermined communication standard. Specifically, the communication device 13 performs wireless communication by, for example, wireless fidelity (Wi-Fi: registered trademark) conforming to IEEE802.11. However, the communication device 13 may perform wireless communication with the external device through a mobile communication system or the like.

The display device 14 is, for example, a liquid crystal display or an organic EL display provided on a console panel in front of the driver's seat 5.

The display device 14 visually displays predetermined character information and images for the occupant (worker) of the tractor 1 to provide the occupant with information.

The positioning device 15 is a device that measures the own-vehicle position by global navigation satellite system (GNSS) positioning. Specifically, the positioning device 15 is a multi-GNSS receiver corresponding to a plurality of types of satellite positioning systems.

Therefore, the positioning device 15 measures the own-vehicle position by communicating with a satellite of at least one system exemplified below in addition to a global positioning system (GPS).

Examples of satellite positioning systems other than the GPS: "GLONASS" of Russia, "Galileo" of the European Commission, "BeiDou" of China, "Michibiki (QZSS)" of Japan, "IRNSS" of India, "WAAS" of the United States, "EGNOS" of Europe, "MSAS" of Japan, "GAGAN" of India, and the like.

A positioning method of the positioning device 15 may be either single positioning or relative positioning, but relative positioning is preferably employed because high accuracy in units of mm or cm is required in the farm field work.

Therefore, the positioning device 15 may be a mobile station of real-time kinematics (RTK)-GNSS. In this case, the mobile station wirelessly receives correction information from a reference station 9 (see FIG. 1) installed at a point whose coordinates are known, and corrects the detected position based on the received correction information. Therefore, the own-vehicle position can be measured with higher accuracy as compared with the case without correction.

The operation terminal 16 is a terminal device that receives an operation related to traveling of the work vehicle 1 and the implement 8. The operation terminal 16 is also referred to as a virtual terminal (VT).

The operation terminal 16 is a tablet-type terminal device including a touch panel type display device, at least one operation button, and the like. The display device is, for example, a liquid crystal display, an organic light emitting diode (OLED) display, or the like.

The occupant of the tractor 1 can execute various operations such as switching on/off of an automatic driving mode, recording or editing of an environmental map, setting of a target route, and switching on/off of the implement 8 by the operation terminal 16.

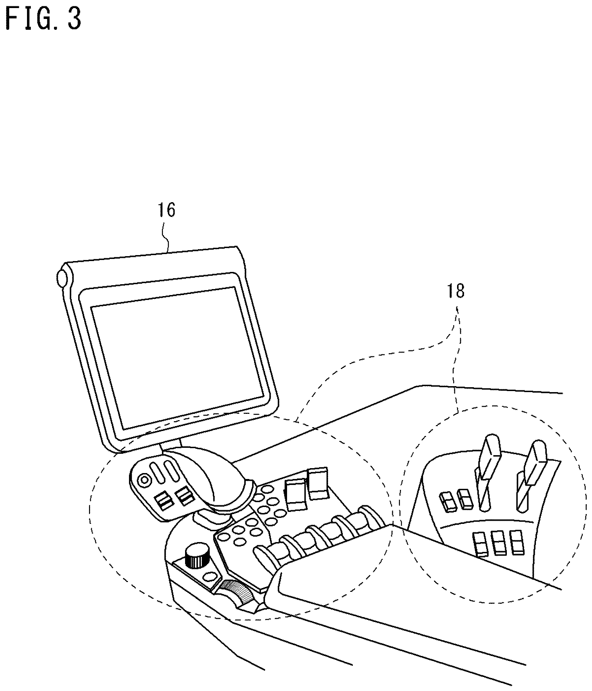

At least a part of these operations can also be performed by operating an operation switch group 18 (see FIG. 3). The operation terminal 16 can be configured to be detachable from the work vehicle 1. In this case, the removed operation terminal 16 communicates with the communication device 13 by a short-distance communication method.

FIG. 3 is a perspective view illustrating an example of the operation terminal 16 and the operation switch group 18 installed inside the cabin 6. The switch group 18 including a plurality of switches operable by the occupant is disposed inside the cabin 6.

The operation switch group 18 includes a selection switch of selecting a shift stage of the main shift or the sub-shift, a mode switching switch of switching an automatic driving mode, a manual driving mode, and the like, a front/rear switch that switches forward movement and backward movement, a raising/lowering switch that raises or lowers the implement 8, and the like.

### [Configuration example of server]

As illustrated in FIG. 1, the server 40, which is a type of management device of the agricultural machine, is an installation type computer including the control device 41, a storage device 42, and a communication device 43.

The control device 41 is an arithmetic processing device including a central processing unit (CPU), a random access memory (RAM), and the like. The control device 41 may include an integrated circuit such as a field-programmable gate array (FPGA).

The control device 41 reads a computer program 44 stored in the storage device 42 to a main memory (RAM), and performs various types of information processing according to the read program 44.

The storage device 42 is an auxiliary storage device including a nonvolatile memory such as an HDD and an SSD. The storage device 42 may include a flash ROM, a USB memory, or an SD card. The communication device 43 is a communication interface capable of performing communication via the public communication network 210.

The computer program 44 stored in the storage device 42 includes, for example, a program for causing the control device 41 to execute creation and registration of a work plan, registration of a farm field map, generation and registration of a travel route for automatic driving, and the like.

The work plan of the tractor 1 is a data group that defines a schedule (time, work subject, work place, work content, and the like) of near future agricultural works in the farm field. Types of agricultural works include soil making, ridge coating, tilling, rice planting (paddy work), paddling, grooving, weeding, top dressing, harvesting, fertilization, sowing, prevention (chemical spraying), agricultural water (water adjustment), snow removal, and the like.

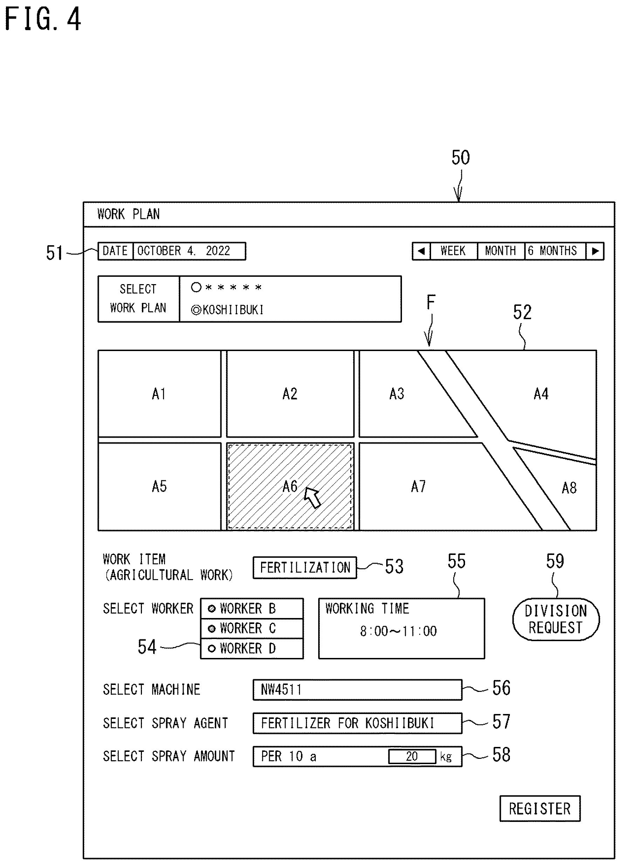

Upon receiving a creation request of the work plan from the management terminal 30, the communication device 43 inputs the received creation request to the control device 41. In response to the input creation request, the control device 41 transmits a predetermined setting screen 50 (see FIG. 4) to the management terminal 30.

Upon receiving a transmission request of the work plan from the mobile terminal 20, the communication device 43 inputs the transmission request to the control device 41. In response to the input transmission request, the control device 41 transmits the created work plan read from the storage device 42 to the mobile terminal 20.

### [Setting screen of work plan]

FIG. 4 is an explanatory view illustrating an example of the setting screen 50 of the work plan.

In response to the creation request from the logged-in management terminal 30, the control device 41 of the server 40 causes the management terminal 30 to output the setting screen 50 of the work plan.

As illustrated in FIG. 4, the setting screen 50 of the work plan includes, for example, the following nine setting units 51 to 59 as setting items that receives input of setting information by the administrator.

Among the nine setting units 51 to 59, a date for performing agricultural works is set in a date setting unit 51. In a farm field setting unit 52, a digital map of a farm F including a plurality of farm fields Ai (i = 1 to 8 in the illustrated example) in which position information such as a lot number is registered in advance in the storage device 42, is displayed.

By clicking any one of the farm fields Ai included in the digital map in the farm field setting unit 52, the administrator can designate the position information of the farm field Ai where the tractor 1 performs the agricultural works. FIG. 4 illustrates a case where a hatched farm field A6 is selected.

The position information of the farm field Ai is, for example, a series of position data groups capable of specifying a boundary line representing an extension of the farm field Ai. The series of position data groups includes, for example, coordinate values (latitude value and longitude value) of point groups arranged at predetermined intervals.

A method of setting the farm field Ai in the farm field setting unit 52 may be a method of inputting identification information on an administrative district such as a lot number or a name of a predetermined farm field defined in advance.

In a work setting unit 53, the type of agricultural work in the selected farm field Ai is set. For example, the administrator can select one type from the types displayed by a pull-down method. In the example of FIG. 4, "fertilization" is selected.

In a worker setting unit 54, a list of identification information (for example, names) of workers registered in the management terminal 30 or the server 40, is displayed. The administrator designates the worker who performs the work in the farm field Ai by selecting at least one name from the list.

In a time setting unit 55, a time zone (start time and end time of the work) of performing the agricultural work is set. In a machine setting unit 56, the type of the implement 8 used for agricultural works is set. These input methods may be either text input or selection input.

In a spray agent setting unit 57, the type of spray agent (fertilizer and chemical) to be used for fertilization, top dressing, prevention, and the like is set. In a spray amount setting unit 58, the spray amount of the spray agent per predetermined area is set. These input methods may also be either text input or selection input.

A division setting unit 59 is an operation part for requesting the server 40 to perform division processing related to one farm field Ai among the plurality of farm fields Ai included in the farm F.

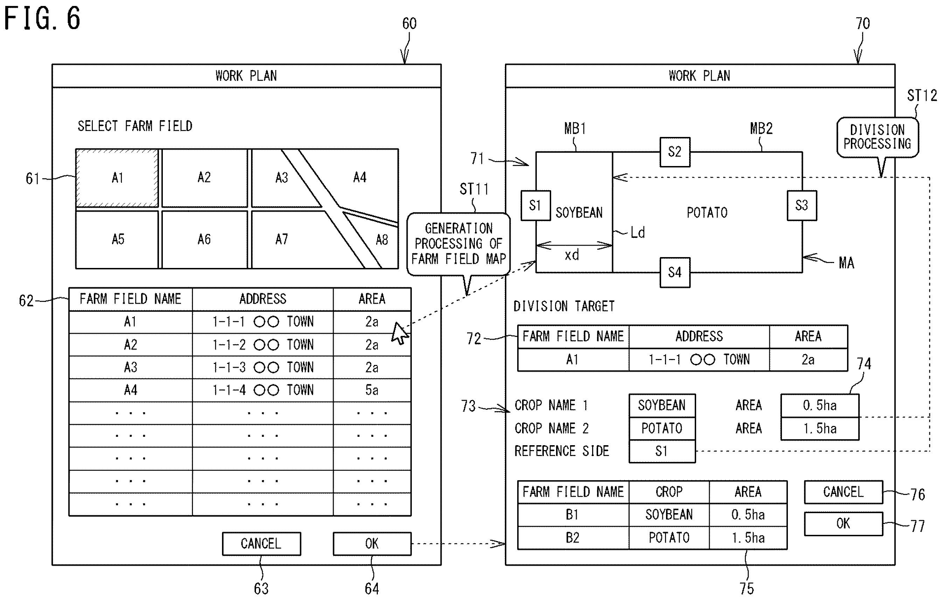

Upon receiving an operation input to the division setting unit 59, the control device 41 of the server 40 causes the management terminal 30 to display a division setting screen 70 (see FIG. 6) for the division processing. Note that details of the division processing will be described later.

The setting information input to the setting units 51 to 58 of the setting screen 50 is transmitted to the server 40. The control device 41 of the server 40 creates a work plan based on the received setting information, and stores the created work plan in a predetermined database of the storage device 42.

In response to the transmission request from the logged-in mobile terminal 20, the control device 41 of the server 40 extracts the work plan including the worker handling the mobile terminal 20 from the storage device 42. The control device 41 transmits the extracted work plan to the mobile terminal 20.

The transmission request of the mobile terminal 20 may include identification information of the farm field Ai scheduled to be worked. In this case, the control device 41 extracts the work plan of the farm field Ai included in the transmission request from the storage device 42, and transmits the extracted work plan to the mobile terminal 20.

### [Configuration example of mobile terminal]

As illustrated in FIG. 1, the mobile terminal 20 is a mobile computer including a control unit 21, a storage unit 22, a communication unit 23, and a display unit 24. Specifically, the mobile terminal 20 is a smartphone, a tablet-type PC, a notebook-type PC, or the like.

The control unit 21 is an arithmetic processing device including a CPU, a RAM, and the like. The control unit 21 may include an integrated circuit such as an FPGA.

The control unit 21 reads a computer program 25 stored in the storage unit 22 to a main memory (RAM), and performs various types of information processing according to the read program 25. The storage unit 22 is an auxiliary storage device including a nonvolatile memory such as an HDD and an SSD.

The program 25 stored in the storage device 42 includes a program for causing the control unit 21 to execute, for example, a transmission request and display processing of the work plan.

The communication unit 23 is a communication interface capable of performing both narrow-area communication with the communication device 13 of the tractor 1 and wide-area communication with the server 40. The display unit 24 is, for example, a liquid crystal display or an organic EL display on which a user can perform a touch operation.

Upon receiving the work plan from the server 40, the communication unit 23 inputs the received work plan to the control unit 21. The control unit 21 generates a notification screen 24A of the input work plan, and causes the display unit 24 to display the generated notification screen 24A.

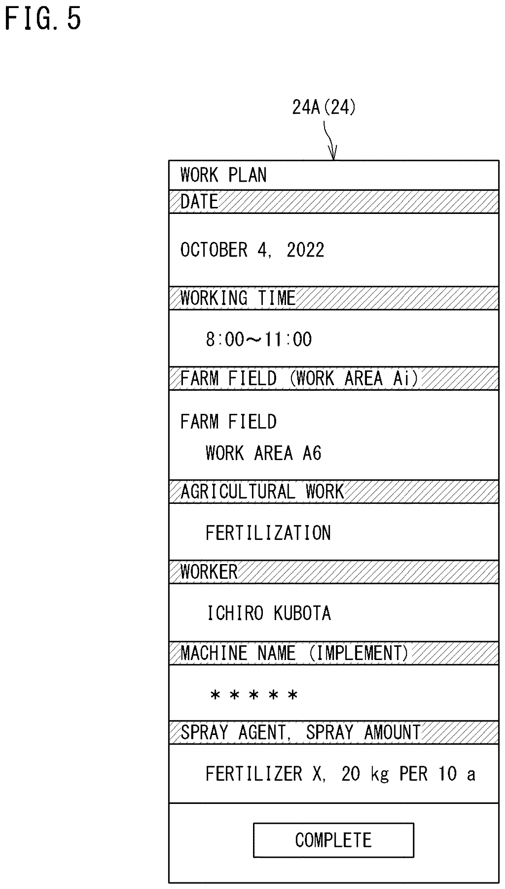

FIG. 5 is an explanatory view illustrating an example of the notification screen 24A of the work plan.

As illustrated in FIG. 5, the notification screen 24A of the work plan displayed by the display unit 24 includes, for example, the following display items.

Note that a "complete button" at the bottom of the notification screen 24A is an operation button for notifying the server 40 and the management terminal 30 of work completion.
1) Date of agricultural work (for example, October 4, 2022)
2) Working time of agricultural work (for example, 8:00 to 11:00)
3) Type of farm field (for example, work area A6)
4) Type of agricultural work (for example, fertilization)
5) Worker (for example, Ichiro Kubota)
6) Machine name used for agricultural work
7) Type of spray agent and spray amount (for example, 20 kg of fertilizer X per 10 a)

### [Division processing of farm field]

FIG. 6 to FIG. 8 are explanatory diagrams illustrating examples of a series of setting screens 60, 70, 80, and 90 used for the division processing of the farm field Ai executed by the control device 41 of the server 40.

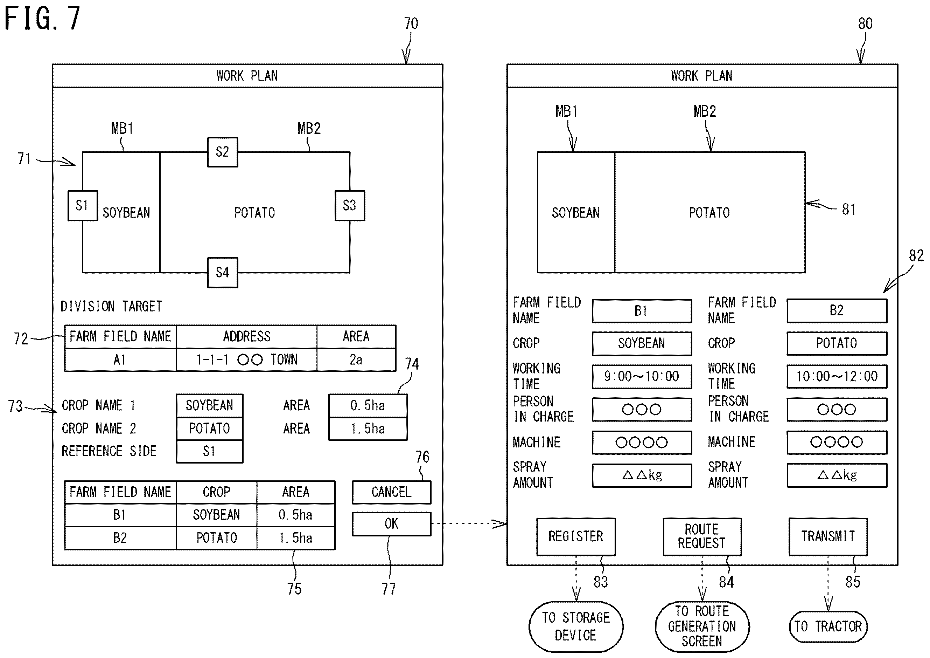

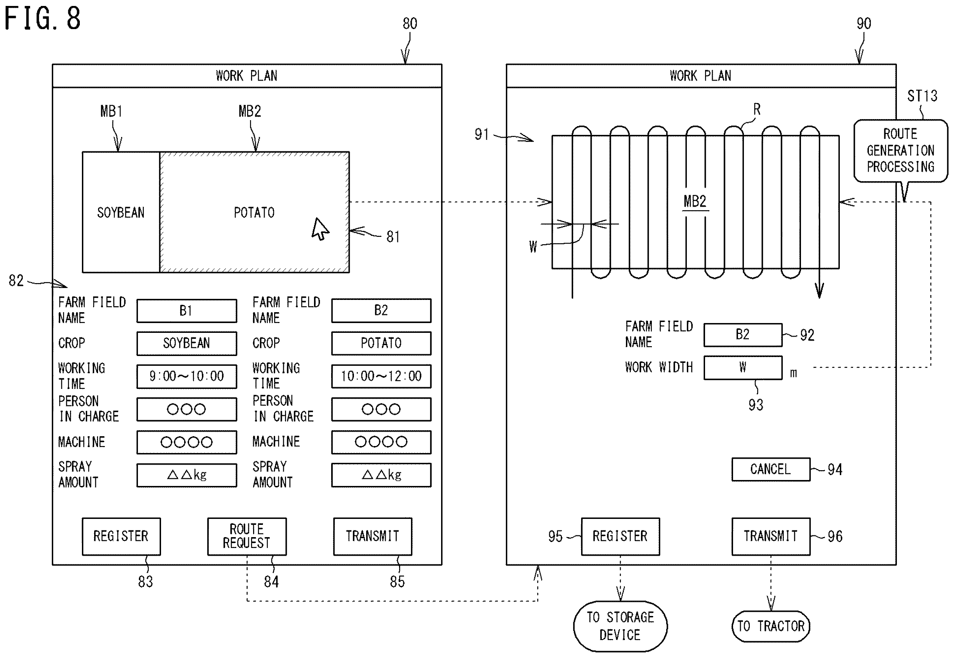

Specifically, FIG. 6 is an explanatory diagram illustrating an example of an initial setting screen 60 and a division setting screen 70. FIG. 7 is an explanatory diagram illustrating an example of the division setting screen 70 and a content confirmation screen 80. FIG. 8 is an explanatory diagram illustrating an example of the content confirmation screen 80 and a route setting screen 90.

As described above, when the division setting unit 59 of the setting screen 50 of the work plan is operated, the control device 41 of the server 40 causes the management terminal 30 to display the initial setting screen 60 illustrated in FIG. 6.

As illustrated in FIG. 6, the initial setting screen 60 includes, for example, a farm field display unit 61, a farm field selection unit 62, a cancel button 63, and an OK button 64.

The digital map included in the farm F including the plurality of farm fields Ai (i = 1 to 8 in the illustrated example) is displayed in the farm field display unit 61. A farm field name Ai is superimposed and written inside each farm field included in the digital map.

Current state information of the farm field Ai is displayed in the farm field selection unit 62. The current state information of the farm field Ai includes, for example, "farm field name", "address", "area", and the like of each farm field Ai included in the farm F. These pieces of information are information registered in advance in the storage device 42 of the server 40.

The cancel button 63 is an operation input unit for canceling the selection of the farm field Ai. The OK button 64 is an operation input unit for confirming the selection of the farm field Ai.

When a click operation occurs in a state in which a cursor is present in any one of the farm fields Ai listed in the farm field selection unit 62, selection of the clicked farm field Ai is temporarily determined. When the cancel button 63 is operated in this state, the temporary determination is canceled, and when the OK button is operated in this state, the temporary determination is confirmed. Here, it is assumed that the selection of the farm field A1 is confirmed.

When the farm field A1 is selected, the control device 41 of the server 40 executes generation processing of a farm field map MA in a predetermined data format corresponding to the selected farm field A1 (step ST11).

Specifically, the control device 41 of the server 40 executes the generation processing of the farm field map MA by the following procedures 11 to 13. Note that the control device 41 once records the generated farm field map MA in its own memory.

Procedure 11: The position information (for example, a series of position data groups) of the selected farm field A1 is read from the storage device 42.

Procedure 12: A plurality of linear equations capable of linear approximation is determined from the read position data groups.

Procedure 13: An intersection of the determined linear equations is set as a corner point of the farm field A1, and a region surrounded by the determined plurality of linear equations is set as the farm field map MA.

In the case of the procedures 11 to 13 described above, the series of position data groups registered in advance in the storage device 42 corresponds to "boundary information" for defining the boundary line of the farm field A1.

The data format of the farm field map MA is, for example, a plurality of linear equations (four linear equations in the case of a quadrangle) that is an approximate equation of the extension of the farm field A1. In addition, since the boundary information including the series of position data groups described above is registered in the storage device 42 of the server 40, the storage device 42 corresponds to an acquisition device of the boundary information.

When the OK button 64 on the initial setting screen 60 is operated, the control device 41 of the server 40 causes the management terminal 30 to display the division setting screen 70 illustrated in FIG. 6.

As illustrated in FIG. 6, the division setting screen 70 includes, for example, a map display unit 71, a target display unit 72, a planting setting unit 73, an area setting unit 74, an information confirmation unit 75, a cancel button 76, and an OK button 77.

In the map display unit 71, the farm field map MA (farm field map of farm field A1) once recorded in the memory is displayed. The farm field map MA is displayed with reference icons S1 to S4 attached to respective sides.

The reference icons S1 to S4 are icons for defining a reference side, and the reference side is a side with which a division line Ld to be described later holds parallelism. Thus, for example, when the reference icon S1 on the left side is selected, the division line Ld becomes a line segment parallel to the left side of the farm field map MA.

In the target display unit 72, the current state information (for example, farm field name, address, and area) of the selected farm field A1 (farm field A1 before division) is displayed.

The planting setting unit 73 is a setting unit that receives inputs of the type of crops to be planted in the farm field after division and the reference side. In the example of the drawing, "soybean" is input to a crop name 1, "potato" is input to a crop name 2, and "S1" is input to the reference side. Note that the crop name 1 means a crop in a farm field closer to the reference side, and the crop name 2 means a crop farther from the reference side.

The area setting unit 74 is a setting unit that receives an input of the area of the farm field after division (hereinafter, also referred to as "divided farm field").

In the example of the drawing, "0.5 ha" is input as the area of the divided farm field corresponding to the crop name 1, and "1.5 ha" is input as the area of the divided farm field corresponding to the crop name 2. In a case where an area that is too small to be planted or an area that is equal to or larger than the area of the farm field A1 is input, the control device 41 causes the division setting screen 70 to display a pop-up window for warning that input is impossible.

When there is an operation input to the planting setting unit 73 and the area setting unit 74, the control device 41 of the server 40 executes the division processing of dividing the farm field A into a plurality of divided farm fields based on the input information to the setting units 73 and 74 (step ST12).

The division processing described above is, for example, processing of defining the division line Ld that divides the farm field A1 into a plurality of divided farm fields B1 and B2 each having a plantable area.

Specifically, the control device 41 of the server 40 executes the division processing for dividing the farm field A1 into a plurality of divided farm fields B1 and B2 by the following procedures 21 to 24.

Procedure 21: A relational equation between the area of the divided farm field B1 (for example, shape is rectangle) closer to the reference side S1 and a distance x from the reference side S1 to the division line Ld is read from the storage device 42.

Procedure 22: An area value (here, "0.5 ha") input to the area setting unit 74 is substituted into the read relational equation to calculate a position xd of the division line Ld from the reference side S1.

Procedure 23: The division line Ld separated from the reference side S1 by the position xd is drawn on the farm field map MA displayed on the map display unit 71.

Procedure 24: A region from the reference side S1 to the division line Ld is set as a map MB1 of the divided farm field B1 (hereinafter, referred to as "divided farm field map MB1") corresponding to the crop name 1 (soybean in the example of the drawing), and a region opposite to the reference side S1 as viewed from the division line Ld is set as a map MB2 of the divided farm field B2 (hereinafter, referred to as "divided farm field map MB2") in which the crop name 2 (potato in the example of the drawing) is planted.

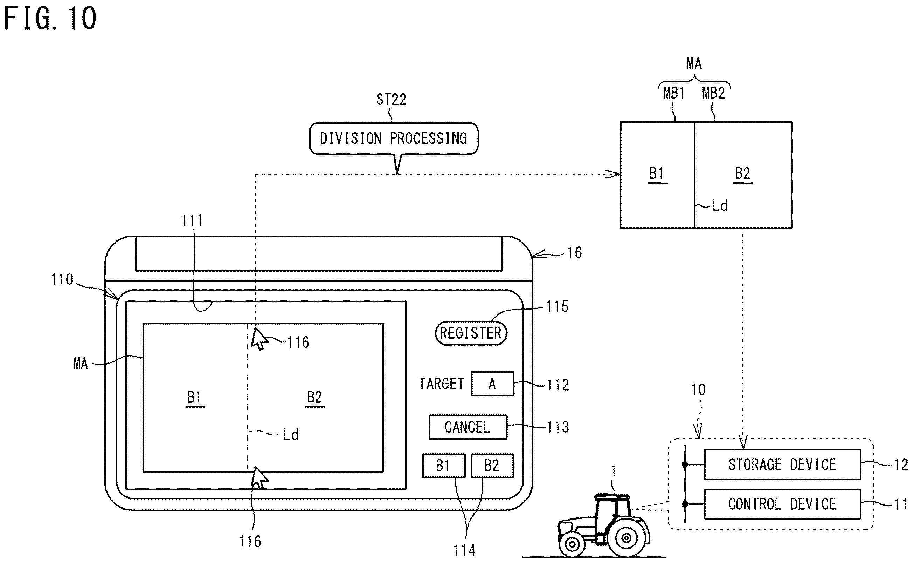

Note that the position of the division line Ld may be determined by specifying the start and end of the division line Ld by the operation input using a "pointer" displayed on the map display unit 71 in FIG. 6, similarly to the case of the division processing (step ST22) in FIG. 10 described later.

In the information confirmation unit 75, the current state information of the divided farm fields B1 and B2 is displayed. The current state information of the divided farm fields B1 and B2 includes, for example, "farm field name", "crop", "area", and the like of the divided farm fields B1 and B2. Note that the administrator can change the names of the divided farm fields B1 and B2 by inputting a text in the column of "farm field name" of the information confirmation unit 75.

The cancel button 76 is an operation input unit for canceling a definition of the divided farm fields B1 and B2, and the OK button 77 is an operation input unit for confirming the definition.

Therefore, when the cancel button 63 is operated, the control device 41 of the server 40 deletes the position xd of the division line Ld from the memory, and causes the division setting screen 70 to display a pop-up window prompting reinput to the planting setting unit 73 and the area setting unit 74.

When the OK button 77 is operated, the control device 41 of the server 40 causes the management terminal 30 to display the content confirmation screen 80 illustrated in FIG. 7.

As illustrated in FIG. 7, the content confirmation screen 80 includes, for example, a map display unit 81, a work setting unit 82, a registration operation unit 83, a route request unit 84, and a transmission operation unit 85.

In the map display unit 81, the shapes of the divided farm field maps MB1 and MB2 confirmed by the division processing and the names of crops planted in the divided farm fields B1 and B2 are displayed.

The work setting unit 82 is a setting unit that defines work content performed in each of the divided farm fields B1 and B2. The setting items of the work content can include, for example, "farm field name", "crop", "working time", "person in charge", "machine", and "spray amount".

The names of the farm fields (B1 and B2 in the example of the drawing) and the names of the crops (soybean and potato in the example of the drawing) determined on the division setting screen 70 are automatically written in the items of "farm field name" and "crops" among the setting items described above.

By text input, selection of a pull-down menu, or the like, the administrator can perform predetermined setting input in the items of "working time", "person in charge", "machine" (this means an implement mounted on the tractor 1), and "spray amount" among the setting items described above.

The registration operation unit 83 is an operation unit for registering information displayed on the content confirmation screen 80 in the storage device 42.

Therefore, when the administrator operates the registration operation unit 83, the control device 41 of the server 40 stores the confirmed information including the divided farm field maps MB 1 and MB2 in a predetermined database constructed in the storage device 42.

The route request unit 84 is an operation unit for requesting generation of a travel route for automatic driving for any of the divided farm field maps B1 and B2 displayed on the map display unit 81. Details of the generation processing of the travel route will be described later.

The transmission operation unit 85 is an operation unit for transmitting information displayed on the content confirmation screen 80 to the tractor 1. Therefore, when the administrator operates the transmission operation unit 85, the control device 41 of the server 40 controls the communication device 43 so that the confirmed information including the divided farm field maps MB1 and MB2 is transmitted to the tractor 1.

As illustrated in FIG. 8, when the route request unit 84 is operated after the divided farm field map B2 of the map display unit 81 is activated by, for example, a click operation, the control device 41 of the server 40 causes the management terminal 30 to display the route setting screen 90.

As illustrated in FIG. 8, the route setting screen 90 includes, for example, a map display unit 91, a name display unit 92, a work width setting unit 93, a cancel button 94, a registration operation unit 95, and a transmission operation unit 96.

The divided farm field map MB2 selected (here, it is assumed that "MB2" is selected) in the map display unit 81 is displayed in the map display unit 91. In the name display unit 92, the farm field name B2 of the selected map MB2 is displayed.

The work width setting unit 93 is a setting unit that receives an input of a work width W of the tractor 1. The work width W is a width dimension between adjacent straight routes in a case where the tractor 1 automatically travels.

The work width W may be automatically determined by the control device 41 from the type of the implement 8 set by the work setting unit 82 of the division confirmation screen 80.

When the work width W is input to the work width setting unit 93, the control device 41 of the server 40 executes generation processing of a travel route in a case where work travel is performed by automatic driving (step ST13). Specifically, the control device 41 executes the generation processing of a travel route R for the divided farm field map MB2 by the following procedures 31 to 34.

Procedure 31: With the variable of a route number as "n", an "n-th route" representing a group of straight lines parallel to a reference direction (for example, the direction of the reference side S1) of the divided farm field map MB2 is defined.

Procedure 32: A straight line away from one edge of the divided farm field map MB2 by a predetermined distance (for example, W/2) is set as a first route.

Procedure 33: A straight line away from the first route by the work width W is set as a second route.

Procedure 34: The procedure 33 is repeated until the n-th route reaches the vicinity of the other end edge of the divided farm field map MB2.

Procedure 35: The end of the n-th route and the start of the (n+1)-th route are connected by a semicircular route to form one travel route R that reciprocates in the reference direction inside the divided farm field map MB2.

The registration operation unit 95 is an operation unit for registering, in the storage device 42, the travel route R for automatic driving generated using the route setting screen 90.

Therefore, when the administrator operates the registration operation unit 95, the control device 41 of the server 40 stores the travel route R in a case where the tractor 1 automatically travels in the divided farm field map MB2, in a predetermined database constructed in the storage device 42.

The transmission operation unit 96 is an operation unit for transmitting, to the tractor 1, the travel route R for automatic driving generated using the route setting screen 90.

Therefore, when the administrator operates the transmission operation unit 96, the control device 41 of the server 40 controls the communication device 43 so that the travel route R in the case where the tractor 1 automatically travels the divided farm field map MB 1, is transmitted to the tractor 1.

### [Registration of farm field map using operation terminal]

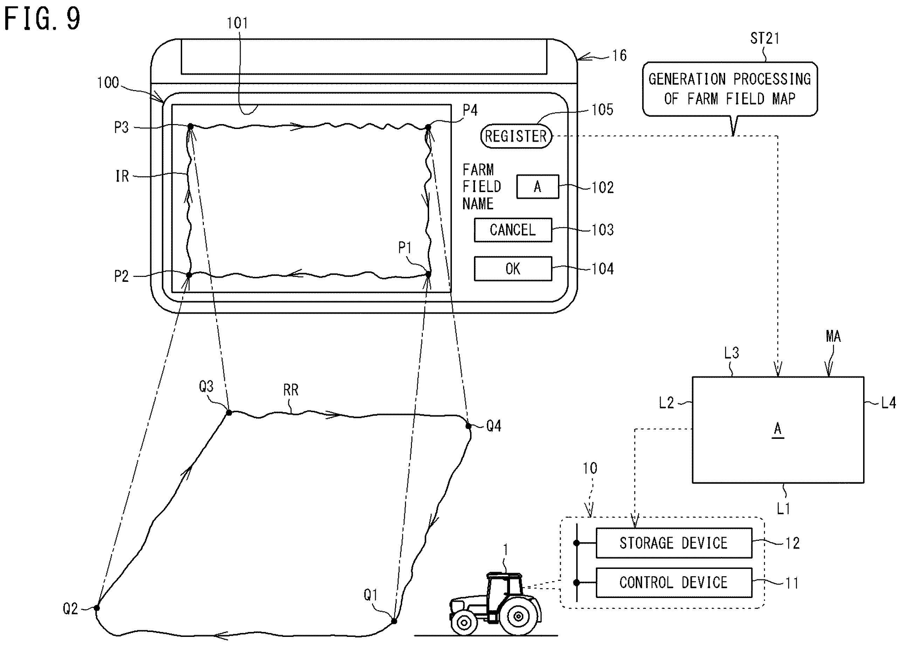

FIG. 9 is an explanatory diagram illustrating an example of registration processing of the farm field map MA executed by the control device 11 of the tractor 1. The meaning of each of the parameters illustrated in FIG. 9 is as follows.

RR: This is a traveling trajectory in a case where the tractor 1 actually travels a predetermined place of the farm. Hereinafter, it is referred to as a "real route RR".

Q1 to Q4: These are points where the tractor 1 changes its traveling direction by a predetermined angle or more in the real route RR. Hereinafter, each of them is referred to as a "real turning point Qj" (j = 1 to 4).

IR: This is a traveling trajectory of the tractor 1 on the digital map corresponding to the real route RR. Hereinafter, it is referred to as an "imaginary route IR".

P1 to P4: These are direction turning points of the tractor 1 on the digital map corresponding to the real turning point Qj. Hereinafter, each of them is referred to as an "imaginary turning point Pj" (j = 1 to 4).

As illustrated in FIG. 9, the control device 11 of the tractor 1 can execute a "farm field registration mode" using a farm field registration screen 100 displayed by the operation terminal 16.

The farm field registration screen 100 used in the farm field registration mode includes, for example, a tracking screen 101, a name setting unit 102, a cancel button 103, an OK button 104, and a registration operation unit 105. A name (here, "A") of an arbitrary farm field defined by the occupant of the tractor 1 can be input to the name setting unit 102.

In the farm field registration mode, a trajectory along which the tractor 1 has traveled is drawn on a tracking screen 101 of the farm field registration screen 100. Specifically, the control device 11 draws the current position acquired from the positioning device 15 on the digital map of the tracking screen 101.

When the occupant of the tractor 1 operates the OK button 104 while traveling, a point where the operation input is made is regarded as a real conversion point Qj. In this case, the control device 11 temporarily determines the imaginary conversion point Pj corresponding to the real conversion point Qj and once records the imaginary conversion point Pj in the memory.

Therefore, when the tractor 1 travels in the farm on the real route RR of a closed loop and the occupant operates the OK button 104 in the middle of traveling, the control device 11 records, in the memory, the imaginary route IR corresponding to the real route RR and the plurality of imaginary turning points Pj corresponding to the respective real turning points Qj.

The occupant of the tractor 1 can determine whether the farm field A surrounded by the imaginary route IR is appropriate based on the shape of the imaginary route IR drawn on the tracking screen 101.

In a case where the occupant of the tractor 1 determines that the drawn imaginary route IR is inappropriate, the occupant just operates the cancel button 103. In this case, the control device 11 deletes the imaginary route IR and the imaginary turning points Pj once recorded in the memory.

In a case where the occupant of the tractor 1 determines that the drawn imaginary route IR is appropriate, the occupant operates the registration operation unit 105. In this case, the control device 11 of the tractor 1 executes generation processing of the farm field map MP (step ST21).

Specifically, the control device 11 of the tractor 1 executes the generation processing of the farm field map MA by the following procedures 41 to 43, and causes the storage device 12 to store the generated farm field map MA.

Procedure 41: A plurality of linear equations L1 to L4 capable of linear approximation is determined from a trajectory between adjacent imaginary turning points Pj and Pj+1 among traveling trajectories constituting the imaginary route IR. Note that the linear equations L1 to L4 may be equations in a case where the adjacent imaginary turning points Pj and Pj+1 are connected by a straight line.

Procedure 42: A region surrounded by the plurality of determined linear equations L1 to L4 is set as the farm field map MA.

Procedure 43: An intersection of the determined linear equations L1 to L4 is set as a corner point of the farm field map MA.

In the case of the procedures 41 to 43 described above, a series of position data groups constituting the real route RR, which is original data of the imaginary route IR, corresponds to "boundary information " for defining the boundary line of the farm field A.

The data format of the farm field map MA is the linear equations L1 to L4 which are approximate equations of the extension of the farm field A. In addition, the communication device 13 that receives the series of position data groups constituting the boundary information corresponds to an acquisition device of the boundary information.

### [Division processing of farm field map using operation terminal]

FIG. 10 is an explanatory diagram illustrating an example of the division processing of the farm field map MA executed by the control device 11 of the tractor 1.

As illustrated in FIG. 10, the control device 11 of the tractor 1 can execute a "farm field division mode" using a farm field division screen 110 displayed by the operation terminal 16.

The farm field division screen 110 used in the farm field division mode includes, for example, a map display unit 111, a target selection unit 112, a cancel button 113, a name setting unit 114, and a registration operation unit 115.

A name (here, "B1" and "B2") of an arbitrary divided farm field defined by the occupant of the tractor 1 can be input to the name setting unit 114.

In the farm field division mode, the farm field map MA of the farm field name (here, "A") input to the target selection unit 112 is drawn in the map display unit 111 of the farm field division screen 110.

Next, the control device 11 of the tractor 1 executes the division processing of dividing the farm field A into a plurality of divided farm fields (step ST22).

The division processing described above is, for example, processing of defining the division line Ld that divides the farm field A into a plurality of divided farm fields B1 and B2 each having a plantable area.

Specifically, when the occupant designates the start and end on the boundary line of the farm field map MA by a pointer 116 displayed on the map display unit 111, the control device 11 of the tractor 1 draws a division line Ld including the designated start and end point on the map display unit 111.

In addition, the control device 11 once records the position data of the division line Ld (for example, the coordinates of the start and end) in the memory. Note that, in a case where a region that is too small to be planted is designated, the control device 41 causes the farm field division screen 110 to display a pop-up window for warning that input is impossible.

In a case where the occupant of the tractor 1 determines that the drawn division line Ld is inappropriate, the occupant just operates the cancel button 113. In this case, the control device 11 deletes the position data of the division line Ld once recorded in the memory.

In a case where the occupant of the tractor 1 determines that the drawn division line Ld is appropriate, the occupant operates the registration operation unit 115. In this case, the control device 11 of the tractor 1 determines each region of the farm field map MA divided by the division line Ld as the divided farm field maps MB 1 and MB2.

In addition, the control device 11 causes the storage device 12 to store the determined maps MB1 and MB2 together with the farm field names B1 and B2, respectively.

Note that, similar to the case of the division processing (step ST12) in FIG. 6 described above, an "area setting unit" may be provided in the farm field division screen 110 in FIG. 10, and the position of the division line Ld may be determined based on the area value input to the area setting unit.

### [Generation processing of travel route using operation terminal]

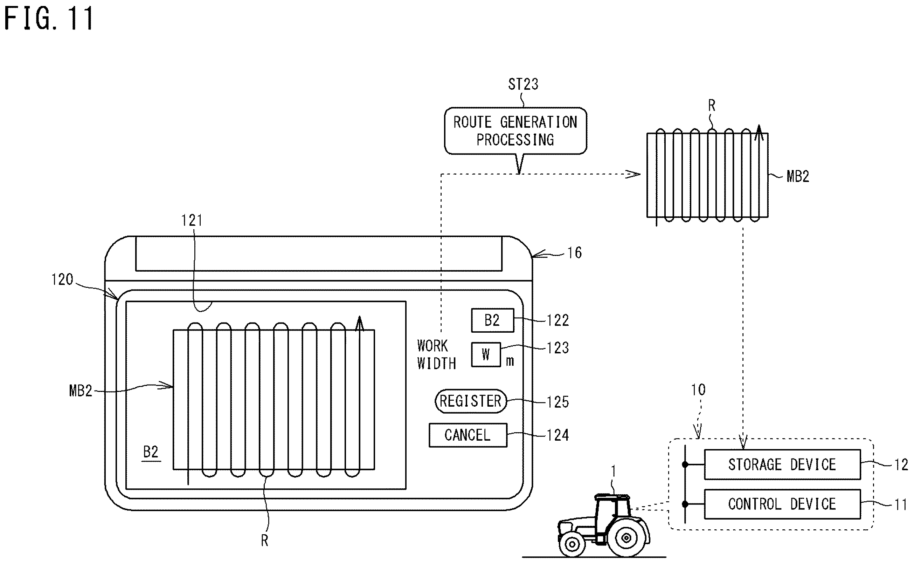

FIG. 11 is an explanatory diagram illustrating an example of the generation processing of the travel route R executed by the control device 11 of the tractor 1.

As illustrated in FIG. 11, the control device 11 of the tractor 1 can execute a "route generation mode" using a route setting screen 120 displayed by the operation terminal 16.

The route setting screen 120 used in the route generation mode includes, for example, a map display unit 121, a target selection unit 122, a work width setting unit 123, a cancel button 124, and a registration operation unit 125.

The divided farm field map MB2 selected (here, it is assumed that "B2" is selected) in the target selection unit 122 is displayed in the map display unit 121. In the map display unit 121, the farm field name B2 of the selected map MB2 is also displayed.

The work width setting unit 123 is a setting unit that receives an input of a work width W of the tractor 1. The work width W is a width dimension between adjacent straight routes in a case where the tractor 1 automatically travels.

Note that the work width W may be automatically determined by the control device 11 from the type of the implement currently mounted or to be mounted.

When the work width W is input to the work width setting unit 123, the control device 11 of the tractor 1 executes the generation processing of the travel route R in a case where work travel is performed by automatic driving (step ST23).

Specifically, the control device 11 executes the generation processing of the travel route R for the divided farm field map MB2 by the procedures 31 to 34 described above. In addition, the control device 11 once records the generated travel route R in the memory, superimposes the generated travel route R on the divided farm field map MB2, and draws the generated travel route R on the map display unit 121.

In a case where the occupant of the tractor 1 determines that the drawn travel route R is inappropriate, the occupant just operates the cancel button 124. In this case, the control device 11 deletes the position data of the travel route R once recorded in the memory.

The registration operation unit 126 is an operation unit for registering, in the storage device 42, the generated travel route R for automatic driving. Therefore, in a case where the occupant of the tractor 1 determines that the drawn travel route R is appropriate, the occupant operates the registration operation unit 126.

In this case, the control device 11 of the tractor 1 causes the storage device 12 to store the position data of the generated travel route R in association with the divided farm field map MB2.

Note that, in the route generation mode of FIG. 11, the divided farm field map MB2 selected by the target selection unit 122 may be not only the map generated by the control device 11 of the tractor 1 but also the divided farm field map MB2 provided from the server 40.

### [Other modifications]

The embodiment disclosed herein is illustrative in all respects and is not restrictive. The scope of rights of the present invention is not limited to the embodiment described above, and includes all modifications within the scope equivalent to the configurations described in the claims.

In the embodiment described above, the case where one farm field map is divided into two divided farm field maps has been exemplified, but one farm field map may be divided into three or more divided farm field maps.

### REFERENCE SIGNS LIST

- 1: work vehicle (tractor, agricultural machine, farm field registration device)
- 2: traveling vehicle body
- 3: prime mover
- 4: transmission device
- 5: driver's seat
- 6: cabin
- 7: coupling portion
- 8: work device (implement)
- 9: reference station
- 10: in-vehicle network
- 11: control device
- 12: storage device (acquisition device)
- 13: communication device
- 14: display device
- 15: positioning device
- 16: operation terminal
- 17: computer program
- 18: operation switch group
- 20: mobile terminal
- 21: control unit
- 22: storage unit
- 23: communication unit
- 24: display unit
- 24A: notification screen
- 25: computer program
- 30: management terminal
- 40: server (management device, farm field registration device)
- 41: control device
- 42: storage device
- 43: communication device (acquisition device)
- 44: computer program
- 50: setting screen
- 51: date setting unit
- 52: farm field setting unit
- 53: work setting unit
- 54: worker setting unit
- 55: time setting unit
- 56: machine setting unit
- 57: spray agent setting unit
- 58: spray amount setting unit
- 59: division setting unit
- 60: initial setting screen
- 61: farm field display unit
- 62: farm field selection unit
- 63: cancel button
- 64: OK button
- 70: division setting screen
- 71: map display unit
- 72: target display unit
- 73: planting setting unit
- 74: area setting unit
- 75: information confirmation unit
- 76: cancel button
- 77: OK button
- 80: content confirmation screen
- 81: map display unit
- 82: work setting unit
- 83: registration operation unit
- 84: route request unit
- 85: transmission operation unit
- 90: route setting screen
- 91: map display unit
- 92: name display unit
- 93: work width setting unit
- 94: cancel button
- 95: registration operation unit
- 96: transmission operation unit
- 100: farm field registration screen
- 101: tracking screen
- 102: name setting unit
- 103: cancel button
- 104: OK button
- 105: registration operation unit
- 110: farm field division screen
- 111: map display unit
- 112: target selection unit
- 113: cancel button
- 114: name setting unit
- 115: registration operation unit
- 116: pointer
- 120: route setting screen
- 121: map display unit
- 122: target selection unit
- 123: work width setting unit
- 124: cancel button
- 125: registration operation unit
- 200: work support system
- 210: public communication network

## Claims

1. A farm field registration device comprising:
an acquisition device that acquires boundary information for defining a boundary line of a farm field;
a control device that creates a farm field map in a predetermined data format based on the boundary information; and
a storage device that stores the farm field map, wherein
the acquisition device acquires division information for defining a division line that divides the farm field into a plurality of divided farm fields each having a plantable area,
the control device executes division processing of creating a divided farm field map corresponding to the plurality of divided farm fields based on the division information, and
the storage device stores the divided farm field map.

2. The farm field registration device according to claim 1, wherein
the division information includes areas of the plurality of divided farm fields, and
the division processing includes processing of determining, based on the areas, a position of the division line by moving at least one side of the farm field map in parallel to a center side.

3. The farm field registration device according to claim 2, wherein
the acquisition device further acquires types of crops to be planted in the plurality of divided farm fields, and
the division processing includes processing of determining a map to which one of the types of crops is to be associated among the plurality of divided farm field maps.

4. The farm field registration device according to any one of claims 1 to 3, wherein
the farm field registration device is a management device capable of communicating with an agricultural machine capable of performing automatic driving, and
the management device transmits the plurality of divided farm field maps to the agricultural machine.

5. The farm field registration device according to any one of claims 1 to 3, wherein the control device generates a travel route of an agricultural machine in a case where the agricultural machine performs work travel by automatic driving, for each of the plurality of divided farm field maps.

6. The farm field registration device according to claim 5, wherein the farm field registration device is a management device capable of communicating with an agricultural machine capable of performing automatic driving, and
the management device transmits the travel route generated by the control device to the agricultural machine.

7. The farm field registration device according to claim 5, wherein
the farm field registration device is an agricultural machine capable of performing automatic driving, and
the agricultural machine generates a travel route in a case of performing work travel by automatic driving, for each of the plurality of divided farm field maps received from the management device.

8. The farm field registration device according to any one of claims 1 to 3, wherein
the farm field registration device is an agricultural machine capable of performing automatic driving, and
the agricultural machine generates a travel route in a case of performing work travel by automatic driving, for each of the plurality of divided farm field maps created by the division processing.

9. A farm field registration method executed by a farm field registration device including
an acquisition device that receives input of boundary information for defining a boundary line of a farm field,
a control device that creates a farm field map in a predetermined data format based on the boundary information, and
a storage device that stores the farm field map, the farm field registration method comprising:
acquiring division information for defining a division line that divides the farm field into a plurality of divided farm fields each having a plantable area;
executing division processing of calculating a divided farm field map corresponding to the plurality of divided farm fields based on the division information; and
storing the divided farm field map.

10. A computer program for causing a computer to function as a farm field registration device including
an acquisition device that receives input of boundary information for defining a boundary line of a farm field,
a control device that creates a farm field map in a predetermined data format based on the boundary information, and
a storage device that stores the farm field map, the computer program comprising:
acquiring division information for defining a division line that divides the farm field into a plurality of divided farm fields each having a plantable area;
executing division processing of calculating a divided farm field map corresponding to the plurality of divided farm fields based on the division information; and
storing the divided farm field map.
